# EUROPEAN PATENT APPLICATION

(11) **EP 3 917 216 A1**
(43) Date of publication of application: **01.12.2021**
(21) Application number: 19941145.5
(22) Date of filing: 14.08.2019
(51) Int. Cl.: H04W 48/16

(54) **WIRELESS COMMUNICATION METHOD, NETWORK DEVICE AND TERMINAL DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIU, Jianhua, Dongguan, Guangdong 523860 (CN)
(74) Representative: Taor, Simon Edward William
(86) International application number: PCT/CN2019/100663
(87) International publication number: WO 2021/026842

(57) **Abstract**

Provided in embodiments of the present application is a wireless communication method, which may reduce the power consumption of a terminal device or a network device and reduce the waste of computing resources. The method comprises: a terminal device judges whether a first cell or first frequency point supports a cell or a frequency point accessed by the terminal device; and when the first cell or first frequency point supports the cell or the frequency point accessed by the terminal device, the terminal device measures the first cell or first frequency point, and/or reports the measurement result of the first cell or first frequency point.

## Description

### Technical Field

Embodiments of the present application relate to the technical field of communication, and more particularly, to a wireless communication method, a network device, and a terminal device.

### Background

In a wireless communication system, a terminal device needs to measure a cell, and may send a measurement result to a network device, which triggers, according to the measurement result of the terminal device, the terminal device to handover between cells or frequency points; or the terminal device may also directly trigger, according to the measurement result, handover between the cells or the frequency points.

How to, for the cell measurement, reduce power consumption of the terminal device or the network device, and avoid waste of computing resources is a problem to be solved urgently.

### Summary

Embodiments of the present application provide a wireless communication method, which may reduce power consumption of a terminal device or a network device, and reduce waste of computing resources.

In a first aspect, a wireless communication method is provided, including: determining, by a terminal device, whether a first cell or a first frequency point is a cell or a frequency point that supports access by the terminal device; and if the first cell or the first frequency point is the cell or the frequency point that supports the access by the terminal device, measuring, by the terminal device, the first cell or the first frequency point, and/or reporting a measurement result of the first cell or the first frequency point.

In the embodiment of the present application, the terminal device judges whether the first cell or first frequency point is the cell or the frequency point that supports the access by the terminal device, and if the first cell or the first frequency point is the cell or the frequency point that supports the access by the terminal device, the terminal device measures the first cell or the first frequency point, such that measurements of all of cells or frequency points may be avoided, power consumption of the terminal device may be reduced, and computing resources of the terminal device may be saved; or if the first cell or the first frequency point is the cell or the frequency point that supports the access by the terminal device, the terminal device does not report the measurement result of the first cell or the first frequency point, such that a network device is prevented from processing the measurement result, thereby reducing power consumption of the terminal device, saving computing resources of the network device, and reducing power consumption of the network device.

In a second aspect, a wireless communication method is provided, including: receiving, by a network device, a measurement report sent by a terminal device for a measured cell or a measured frequency point; determining, by the network device, whether the measured cell or the measured frequency point is a cell or a frequency point that supports access by the terminal device; and if the measured cell or the measured frequency point is the cell or the frequency point that supports the access by the terminal device, performing, by the network device, a handover operation to make the terminal device switch to the measured cell or the measured frequency point.

Therefore, after the network device receives the measurement report sent by the terminal device for the measured cell or the measured frequency point, it judges whether the measured cell or the measured frequency point is the cell or the frequency point that supports the access by the terminal device, and if yes, it performs the handover, such that complexity of processing by the network device may be decreased, thereby bringing unnecessary interaction between network devices, and waste of interface resources between the network devices.

In a third aspect, a terminal device is provided, configured to perform the method according to the first aspect described above.

Specifically, the communication device includes functional modules, configured to perform the method according to the first aspect described above.

In a fourth aspect, a network device is provided, configured to perform the method according to the second aspect described above.

Specifically, the communication device includes functional modules, configured to perform the method according to the second aspect described above.

In a fifth aspect, a communication device is provided, including a processor, and a memory. The memory is configured to store a computer program, and the processor is configured to invoke and run the computer program stored in the memory to execute the method according to the first aspect or the second aspect described above.

In a sixth aspect, a chip is provided, configured to implement the method according to the first aspect or the second aspect described above.

Specifically, the chip includes a processor, configured to invoke, from a memory, and run a computer program to cause a device having the chip installed thereon to perform the method according to the first aspect or the second aspect described above.

In a seventh aspect, a computer readable storage medium is provided, configured to store a computer program that causes a computer to perform the method according to the first aspect or the second aspect described above.

In an eighth aspect, a computer program product is provided, including computer program instructions that cause a computer to perform the method according to the first aspect or the second aspect described above.

In a ninth aspect, a computer program is provided, which, when being run on a computer, causes the computer to perform the method according to the first aspect or the second aspect described above.

### Brief Description of Drawings

FIG. 1 is a schematic diagram of architecture of a communication system in accordance with an embodiment of the present application.
FIG. 2 is a schematic diagram of a wireless communication method in accordance with an embodiment of the present application.
FIG. 3 is a schematic diagram of a wireless communication method in accordance with an embodiment of the present application.
FIG. 4 is a schematic diagram of a wireless communication method in accordance with an embodiment of the present application.
FIG. 5 is a schematic diagram of a wireless communication method in accordance with an embodiment of the present application.
FIG. 6 is a schematic block diagram of a terminal device in accordance with an embodiment of the present application.
FIG. 7 is a schematic block diagram of a network device in accordance with an embodiment of the present application.
FIG. 8 is a schematic block diagram of a communication system in accordance with an embodiment of the present application.
FIG. 9 is a schematic block diagram of a chip in accordance with an embodiment of the present application.

### Detailed Description

Technical solutions in embodiments of the present application will be described below with reference to drawings in the embodiments of the present application. It is apparent that the embodiments described are just a part of the embodiments of the present application, but not all of embodiments. According to the embodiments of the present application, all other embodiments achieved by a person of ordinary skill in the art without making inventive efforts are within the protection scope of the present application.

The technical solutions of the embodiments of the present application may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system, or a 5G system, etc.

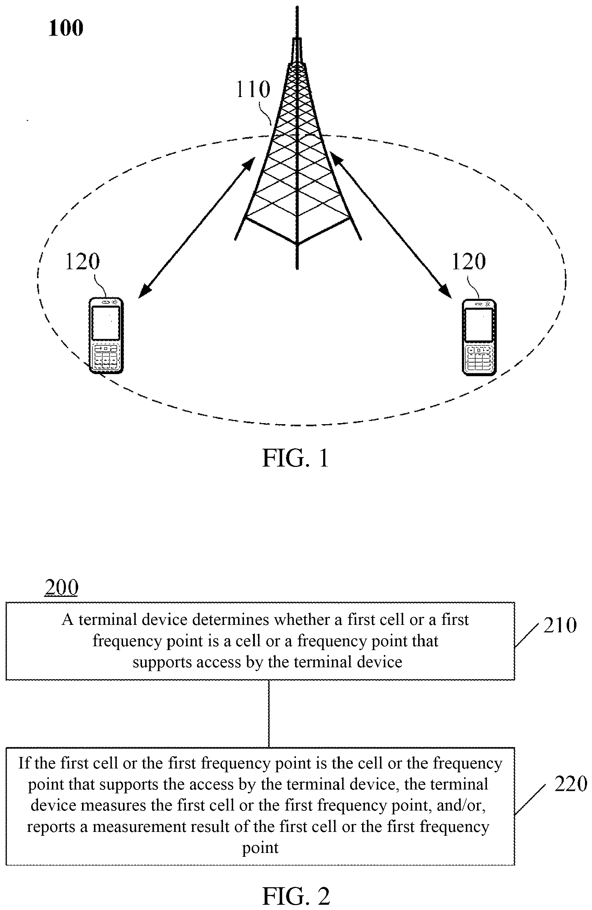

Illustratively, a communication system 100 applied in the embodiments of the present application is shown in FIG. 1. The communication system 100 may include a network device 110, which may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or a CDMA system, or a NodeB (NB) in a WCDMA system, or an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future evolved Public Land Mobile Network (PLMN), etc.

The communication system 100 further includes at least one terminal device 120 located within the coverage area of the network device 110. The "terminal device" as used herein includes, but is not limited to, an apparatus configured to receive/send a communication signal via a wired circuit, for example, via Public Switched Telephone Networks (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a DVB-H network, a satellite network, or an AM-FM broadcast sender; and/or another terminal device; and/or an Internet of Things (IoT) device. A terminal device configured to communicate via a wireless interface may be referred to as "a wireless communication terminal", "a wireless terminal", or "a mobile terminal". Examples of the mobile terminal include, but are not limited to, a satellite or cellular phone; a Personal Communication System (PCS) terminal capable of combining a cellular radio phone with data processing, facsimile, and data communication abilities; a PDA that may include a radio phone, a pager, internet/intranet access, a Web browser, a memo pad, a calendar, and/or a Global Positioning System (GPS) receiver; and a conventional laptop and/or palmtop receiver, or another electronic apparatus including a radio phone transceiver. The terminal device may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved PLMN, etc.

Optionally, Device to Device (D2D) communication may be performed between terminal devices 120.

Optionally, the 5G system or the 5G network may also be referred to as a New Radio (NR) system, or a NR network.

FIG. 1 illustrates exemplarily one network device and two terminal devices. Optionally, the communication system 100 may include multiple network devices, and other quantities of terminal devices may be included within a coverage area of each network device, which is not limited in the embodiments of the present application.

Optionally, the communication system 100 may also include another network entity, such as a network controller, or a mobile management entity, etc., which is not limited in the embodiments of the present application.

It should be understood that a device with a communication function in a network/system in the embodiments of the present application may be referred to as a communication device. Taking the communication system 100 shown in FIG. 1 as an example, the communication device may include a network device 110 and terminal devices 120 which have communication functions, and the network device 110 and the terminal devices 120 may be the specific devices described above, which will not be repeated herein. The communication device may also include another device in the communication system 100, for example another network entity, such as a network controller, or a mobile management entity, etc., which is not limited in the embodiments of the present application.

It should be understood that the terms "system" and "network" herein are often used interchangeably herein. The term "and/or" herein describes an association relationship between associated objects only, indicating that there may be three relationships, for example, A and/or B may indicate three cases: A alone, both A and B, and B alone. In addition, the symbol "/" herein generally indicates that there is an "or" relationship between the associated objects before and after "/".

FIG. 2 is a schematic flow chart of a wireless communication method 200 in accordance with an embodiment of the present application. The method 200 includes at least portion of the following contents.

In 210, a terminal device determines whether a first cell or a first frequency point is a cell or a frequency point that supports access by the terminal device.

In 220, if the first cell or the first frequency point is the cell or the frequency point that supports the access by the terminal device, the terminal device measures the first cell or the first frequency point, and/or reports a measurement result of the first cell or the first frequency point.

Generally, the cell or the frequency point configured by a network device for the terminal device, or a neighboring cell or a frequency point detected by the terminal device needs to be measured by the terminal device. However, in some cases, the cell or the frequency point may not support the access by the terminal device, at which time if the cell or the frequency point is measured, computing resources of the terminal device will be wasted, and high power consumption will be brought.

In the embodiment of the present application, before measuring the first cell or the first frequency point, the terminal device may first judge whether the first cell or the first frequency point is the cell or the frequency point that supports the access by the terminal device. If the first cell or the first frequency point is the cell or the frequency point that supports the access by the terminal device, the terminal device may measure the first cell or the first frequency point; if the first cell or the first frequency point is not the cell or the frequency point that supports the access by the terminal device, the terminal device may not measure the first cell or the first frequency point.

Therefore, if the first cell or the first frequency point is the cell or the frequency point that supports the access by the terminal device, the terminal device measures the first cell or the first frequency point, such that measurements of all of cells or frequency points may be avoided, power consumption of the terminal device may be reduced, and computing resources of the terminal device may be saved.

Alternatively, in the embodiment of the present application, even if the terminal device measures the first cell or the first frequency point, the measurement result may not be reported to the network device, such that the network device may be prevented from processing the measurement result, thereby reducing power consumption of the terminal device, and saving computing resources of the network device.

Specifically, the terminal device may judge whether the first cell or the first frequency point is the cell or the frequency point that supports the access by the terminal device before measuring, at which time it may be determined according to a judging result that whether the cell or the frequency point is measured, and/or whether to the measurement result of the cell or the frequency point is reported.

Alternatively, the terminal device may judge whether the first cell or the first frequency point is the cell or the frequency point that supports the access by the terminal device after the measuring, at which time it may be determined according to the judging result that whether the measurement result of the cell or the frequency point is reported.

Optionally, in an embodiment of the present application, whether the first cell or the first frequency point is the cell or the frequency point that supports the access by the terminal device is determined according to at least one of the following (1) to (4).

(1) Network types supported and/or not supported by the terminal device, and network types supported and/or not supported by the first cell or the first frequency point.

In an implementation, the terminal device may determine whether the first cell or the first frequency point supports the access by the terminal device, according to the network type supported by the terminal device, and the network type supported by the first cell or the first frequency point. If the network type supported by the terminal device is the network type supported by the first cell or the first frequency point, the first cell or the first frequency point supports the access by the terminal device. If the network type supported by the terminal device is not the network type supported by the first cell or the first frequency point, the first cell or the first frequency point does not support the access by the terminal device.

In an implementation, the terminal device may determine whether the first cell or the first frequency point supports the access by the terminal device, according to the network type not supported by the terminal device, and the network type not supported by the first cell or the first frequency point. If the network type not supported by the terminal device is the network type not supported by the first cell or the first frequency point, the first cell or the first frequency point supports the access by the terminal device. If the network type not supported by the terminal device is not the network type not supported by the first cell or the first frequency point, the first cell or the first frequency point does not support the access by the terminal device.

In an implementation, the terminal device may determine whether the first cell or the first frequency point supports the access by the terminal device, according to the network type supported by the terminal device, and the network type not supported by the first cell or the first frequency point. If the network type supported by the terminal device is not the network type not supported by the first cell or the first frequency point, it is determined that the first cell or the first frequency point supports the access by the terminal device. If the network type supported by the terminal device is the network type not supported by the first cell or the first frequency point, it is determined that the first cell or the first frequency point does not support the access by the terminal device.

In an implementation, the terminal device may determine whether the first cell or the first frequency point supports the access by the terminal device, according to the network type not supported by the terminal device, and the network type supported by the first cell or the first frequency point. If the network type not supported by the terminal device is the network type supported by the first cell or the first frequency point, it is determined that the first cell or the first frequency point does not support the access by the terminal device. If the network type not supported by the terminal device is not the network type supported by the first cell or the first frequency point, it is determined that the first cell or the first frequency point supports the access by the terminal device.

In an implementation, the terminal device may determine whether the first cell or the first frequency point supports the access by the terminal device, according to the network types supported and not supported by the terminal device, and the network types supported and not supported by the first cell or the first frequency point. If the network type not supported by the terminal device is the network type not supported by the first cell or the first frequency point, and the network type supported by the terminal device is the network type supported by the first cell or the first frequency point, it is determined that the first cell or the first frequency point supports the access by the terminal device; otherwise, the access by the terminal device is not supported.

In an implementation, whether the first cell or the first frequency point supports the access by the terminal device is determined, according to the network types supported and not supported by the terminal device, and the network types supported by the first cell or the first frequency point. If the network type not supported by the terminal device is not the network type supported by the first cell or the first frequency point, and the network type supported by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, whether the first cell or the first frequency point supports the access by the terminal device is determined, according to the network types supported and not supported by the terminal device, and the network types not supported by the first cell or the first frequency point. If the network type supported by the terminal device is not the network type not supported by the first cell or the first frequency point, and the network type not supported by the terminal device is the network type not supported by the first cell or the first frequency point, it is determined that the first cell or the first frequency point supports the access by the terminal device. Otherwise, it is determined that the first cell or the first frequency point does not support the access by the terminal device.

In an implementation, whether the first cell or the first frequency point supports the access by the terminal device is determined, according to the network type supported by the terminal device, and the network types supported and not supported by the first cell or the first frequency point. If the network type supported by the terminal device is not the network type not supported by the first cell or the first frequency point, and the network type supported by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, whether the first cell or the first frequency point supports the access by the terminal device is determined, according to the network type not supported by the terminal device, and the network types supported and not supported by the first cell or the first frequency point. If the network type not supported by the terminal device is not the network type supported by the first cell or the first frequency point, and the network type not supported by the terminal device is the network type not supported by the first cell or the first frequency point, it is determined that the first cell or the first frequency point supports the access by the terminal device. Otherwise, it is determined that the first cell or the first frequency point does not support the access by the terminal device.

In an embodiment of the present application, the network type supported by the terminal device may be determined according to the network type not supported by the terminal device. For example, all network types in a current system, except the network type not supported by the terminal device, are the network types supported by the terminal device. Similarly, the network type not supported by the terminal device may be determined according to the network type supported by the terminal device; the network type supported by a cell or a frequency point may be determined according to the network type not supported by the cell or the frequency point; the network type not supported by the cell or the frequency point may be determined according to the network type supported by the cell or the frequency point.

Optionally, the different network types mentioned in the embodiment of the present application are distinguished by at least one of the following: whether being a private network or a public network; or whether being a private network that supports a public PLMN or a private network that does not support the public PLMN.

Specifically, the network types may be distinguished into the private network or the public network. Alternatively, the network types may be distinguished into the public network, the private network supporting the public PLMN and the private network that does not support the public PLMN.

The private networks in the embodiment of the present application may be a non-public network (NPN), which includes a Public network integrated NPN (PNI-NPN) and a Stand-alone non-public network (SNPN) network.

The PNI-NPN is a private network supporting private use of the public PLMN, that is, providing a private network service using the public PLMN.

The SNPN is a private network that is not a 3GPP shared network, that is, a specific subject, such as a factory operator, which uses the private network to reserve the PLMN to serve the private network. Herein, the PNI-NPN is also called a Closed access group (CAG).

(2) A cell identifier group or a frequency point identifier group corresponding to the network types supported and/or not supported by the terminal device, and an identifier of the first cell or the first frequency point.

In an implementation, the terminal device may determine whether the first cell or the first frequency point supports the access by the terminal device, according to the cell identifier group or the frequency point identifier group corresponding to the network type supported by the terminal device, and the identifier of the first cell or the first frequency point. If the identifier of the first cell or the first frequency point belongs to the cell identifier group or the frequency point identifier group corresponding to the network type supported by the terminal device, it is determined that the first cell or the first frequency point supports the access by the terminal device. If the identifier of the first cell or the first frequency point does not belong to the cell identifier group or the frequency point identifier group corresponding to the network device supported by the terminal device, it is determined that the first cell or the first frequency point does not support the access by the terminal device.

In an implementation, the terminal device may determine whether the first cell or the first frequency point supports the access by the terminal device, according to the cell identifier group or the frequency point identifier group corresponding to the network type not supported by the terminal device, and the identifier of the first cell or the first frequency point. If the identifier of the first cell or the first frequency point belongs to the cell identifier group or the frequency point identifier group corresponding to the network type not supported by the terminal device, it is determined that the first cell or the first frequency point does not support the access by the terminal device. If the identifier of the first cell or the first frequency point does not belong to the cell identifier group or the frequency point identifier group corresponding to the network device not supported by the terminal device, it is determined that the first cell or the first frequency point supports the access by the terminal device.

In an implementation, the terminal device may determine whether the first cell or the first frequency point supports the access by the terminal device, according to the cell identifier group or the frequency point identifier group corresponding to the network types supported and not supported by the terminal device, and the identifier of the first cell or the first frequency point. If the cell identifier group or the frequency point identifier group corresponding to the network device not supported by the terminal device is not belonged to, and the identifier of the first cell or the first frequency point belongs to the cell identifier group or the frequency point identifier group corresponding to the network type supported by the terminal device, it is determined that the first cell or the first frequency point supports the access by the terminal device. Otherwise, it is determined that the first cell or the first frequency point does not support the access by the terminal device.

(3) Network types supported and/or not supported by a cell or a frequency point accessed currently by the terminal device, and the network types supported and/or not supported by the first cell or the first frequency point.

In an implementation, the terminal device determines whether the first cell or the first frequency point supports the access by the terminal device, according to the network type supported by the cell or the frequency point accessed currently by the terminal device, and the network type supported by the first cell or the first frequency point. If the network type supported by the cell or the frequency point accessed currently by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network type not supported by the cell or the frequency point accessed currently by the terminal device, and the network type not supported by the first cell or the first frequency point. If the network type not supported by the cell or the frequency point accessed currently by the terminal device is the network type not supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network type supported by the cell or the frequency point accessed currently by the terminal device, and the network type not supported by the first cell or the first frequency point. If the network type supported by the cell or the frequency point accessed currently by the terminal device is not the network type not supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network type not supported by the cell or the frequency point accessed currently by the terminal device, and the network type supported by the first cell or the first frequency point. If the network type not supported by the cell or the frequency point accessed currently by the terminal device is not the network type supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network types supported and not supported by the cell or the frequency point accessed currently by the terminal device, and the network types supported and not supported by the first cell or the first frequency point. If the network type not supported by the cell or the frequency point accessed currently by the terminal device is the network type not supported by the first cell or the first frequency point, and the network type supported by the cell or the frequency point accessed currently by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network types supported and not supported by the cell or the frequency point accessed currently by the terminal device, and the network type supported by the first cell or the first frequency point. If the network type not supported by the cell or the frequency point accessed currently by the terminal device is not the network type supported by the first cell or the first frequency point, and the network type supported by the cell or the frequency point accessed currently by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network types supported and not supported by the cell or the frequency point accessed currently by the terminal device, and the network type not supported by the first cell or the first frequency point. If the network type supported by the cell or the frequency point accessed currently by the terminal device is not the network type not supported by the first cell or the first frequency point, and the network type not supported by the cell or the frequency point accessed currently by the terminal device is the network type not supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network type supported by the cell or the frequency point accessed currently by the terminal device, and the network types supported and not supported by the first cell or the first frequency point. If the network type supported by the cell or the frequency point accessed currently by the terminal device is not the network type not supported by the first cell or the first frequency point, and the network type supported by the cell or the frequency point accessed currently by the terminal device is the network type supported by the first cell or the first frequency point, it is determined that the first cell or the first frequency point supports the access by the terminal device. Otherwise, it is determined that the first cell or the first frequency point does not support the access by the terminal device.

In an implementation, the terminal device determines whether the first cell or the first frequency point supports the access by the terminal device, according to the network type not supported by the cell or the frequency point accessed currently by the terminal device, and the network type supported and not supported by the first cell or the first frequency point. If the network type not supported by the cell or the frequency point accessed currently by the terminal device is not the network type supported by the first cell or the first frequency point, and the network type not supported by the cell or the frequency point accessed currently by the terminal device is the network type not supported by the first cell or the first frequency point, it is determined that the first cell or the first frequency point supports the access by the terminal device. Otherwise, it is determined that the first cell or the first frequency point does not support the access by the terminal device.

(4) Historical access information of the terminal device for cells or frequency points.

The historical access information of the terminal device for the cells or the frequency points may include which cells or frequency points have been accessed, and/or a cell or a frequency point that has not been accessed. If the first cell or the first frequency point is the cell or the frequency point that has been accessed, or is not the cell or the frequency point that has not been accessed, it may be considered that the first cell or the first frequency point supports the access by the terminal device. Otherwise, the access by the terminal device is not supported.

The above has introduced whether the first cell or the first frequency point supports the access by the terminal device may be determined according to any one of (1) to (4), while in an embodiment of the present application, whether the first cell or the first frequency point supports the access by the terminal device may also be determined according to more than one of (1) to (4).

Optionally, in an embodiment of the present application, the network type supported by the terminal device may be determined or characterized by an access mode supported by the terminal device.

In an implementation, when the access mode of the terminal device is a CAG only access mode, the network type supported by the terminal device is a CAG network, and not supported network types are an SNPN network and a public network.

In an implementation, when the access mode of the terminal device is an SNPN access mode, the network type supported by the terminal device is the SNPN network, and the not supported network types are the public network and the CAG network.

In an implementation, when the access mode of the terminal device is a non-SNPN access mode, the network type supported by the terminal device is at least one of the public network or the CAG network, and a not supported network is the SNPN network.

Optionally, in an embodiment of the present application, the access mode of the terminal device may be preconfigured, or configured by the network device.

Optionally, in an embodiment of the present application, the network type supported by the cell or the frequency point may be determined or characterized by an allowed access mode.

In an implementation, when the allowed access mode is the CAG only access mode, the network type supported by the cell or the frequency point is the CAG network, and not supported network types are the SNPN network and the public network.

In an implementation, when the allowed access mode is the SNPN access mode, the network type supported by the cell or the frequency point is the SNPN network, and the not supported network types are the public network and the CAG network.

In an implementation, when the allowed access mode is the non-SNPN access mode, the network type supported by the cell or the frequency point is at least one of the public network or the CAG network, and the not supported network is the SNPN network.

Optionally, in an embodiment of the present application, the allowed access mode of the cell or the frequency point may be acquired by the terminal device from a measurement configuration, or may be acquired from system information.

Optionally, in an embodiment of the present application, the network types supported and/or not supported by the terminal device are determined according to at least one of the following: information preset for the terminal device; configuration information from a network side; the historical access information of the terminal device.

The information preset for the terminal device, or the configuration information from the network side may include an access mode preconfigured or configured for the terminal device.

The historical access information of the terminal device may mean a cell or a frequency point of which network type has been accessed, and/or cells or frequency points of which network types have not been accessed. If a cell or a frequency point of a certain network type has been accessed, it is considered that the terminal device supports the network type; otherwise, it may be considered that the terminal device does not support the network type.

Optionally, in an embodiment of the present application, the network types supported and/or not supported by the first cell or the first frequency point are determined according to at least one of the following: a cell identifier group or a frequency point identifier group corresponding to the network types supported and/or not supported by the terminal device; system information acquired from the first cell or the first frequency point; the configuration information from the network side; the information preset for the terminal device; or historical access information of the terminal device for the first cell or the first frequency point.

An implementation in which the terminal device determines the network types supported and/or not supported by the first cell or the first frequency point, according to a cell identifier group or a frequency point group corresponding to the network types supported and/or not supported by the terminal device, may be as below: when a cell identifier group or a frequency point identifier group corresponding to a certain network type supported by the terminal device includes the identifier of the first cell or the first frequency point, the network type supported by the first cell or the first frequency point includes the certain type; when the cell identifier group or the frequency point identifier group corresponding to a certain network type not supported by the terminal device includes the identifier of the first cell or the first frequency point, the network type supported by the first cell or the first frequency point includes the certain type; when the cell identifier group or the frequency point identifier group corresponding to a certain network type supported by the terminal device does not include the identifier of the first cell or the first frequency point, the network type supported by the first cell or the first frequency point does not include the certain type, that is, the not supported network type includes the certain type; when the cell identifier group or the frequency point identifier group corresponding to a certain network type not supported by the terminal device does not include the identifier of the first cell or the first frequency point, the network type supported by the first cell or the first frequency point does not include the certain type, that is, the not supported network type includes the certain type.

An implementation of determining the network types supported and/or not supported by the first cell or the first frequency point according to the historical access information of the terminal device may be implemented as below: when the terminal device accesses the first cell or the first frequency point by using a certain network type, if the access is successful, the network type is considered as the network type supported by the first cell or the first frequency point; otherwise, it is considered as the network type not supported by the first cell or the first frequency point.

Optionally, the cell identifier group or the frequency point identifier group mentioned in the embodiment of the present application may be presented in a form of a list. For example, for the CAG network, the cell identifier group or the frequency point identifier group may be an allowed CAG cell identifier list or a frequency point identifier list. As another example, for the SNPN network, the cell identifier group or the frequency point identifier group may be an allowed SNPN cell identifier list or a frequency point identifier list.

Optionally, in an embodiment of the present application, the cell identifier group or the frequency point identifier group corresponding to the network type supported by the terminal device is determined according to at least one of the following: system information acquired from the network side; the configuration information from the network side; the information preset for the terminal device; and the historical access information of the terminal device.

Determining the cell identifier group or the frequency point identifier group corresponding to the network type supported by the terminal device according to the system information acquired from the network side may be implemented in a following mode: the system information sent by the network side may include the cell identifier group or the frequency point identifier group corresponding to at least one network type, and if the at least one network type includes the network type supported by the terminal device, then from this, the cell identifier group or the frequency point identifier group corresponding to the network type supported by the terminal device may be obtained; or the terminal device summarizes the cell identifier group or the frequency point identifier group corresponding to the network type supported by the terminal device, based on the network type supported or not supported by each cell or frequency point in multiple cells or frequency points, which are sent by the cell or the frequency point.

Determining the cell identifier group or the frequency point identifier group corresponding to the network type supported by the terminal device, based on the historical access information of the terminal device, may be implemented in a following mode: when the historical access information of the terminal device may indicate which cells are accessible, and which cells are inaccessible, when the terminal device accesses a certain type of network, then the terminal device may determine, according to the information, the accessible cells or frequency points to be the cell identifier group or the frequency point identifier group corresponding to the network type.

Optionally, the system information mentioned in an embodiment of the present application may be acquired from system information, after measurement configuration information is received, or before the measurement is performed. The system information in an embodiment of the present application may be borne in a System Information Block 1 (SIB1). The system information in an embodiment of the present application may be acquired by the terminal device from information of a serving cell, or acquired from system information of a neighboring cell acquired by the terminal device. In an embodiment of the present application, acquiring all kinds of information from the system information may make the acquired information more accurate.

Optionally, in an embodiment of the present application, the configuration information from the network side may be borne in a measurement configuration of the network device. The measurement configuration may include type information of each cell (e.g., whether it is an SNPN cell, whether it is a CAG cell, etc.), a PLMN ID, and an identifier of the cell of a certain type (e.g., a CAG ID, or an SNPN ID, or a Network ID (NID), etc.).

Optionally, in an embodiment of the present application, the type information of each cell (e.g., whether it is the SNPN cell, whether it is the CAG cell, etc.), the PLMN ID, and the identifier of the cell of the certain type (e.g., the CAG ID, or the SNPN ID, or the NID, etc.), may also be acquired from system information of the cell.

Optionally, in an embodiment of the present application, when the network type supported by the terminal device only includes the CAG network, and the first cell or the first frequency point is a cell or a frequency point outside an allowed CAG cell identifier group or a cell frequency point group, the first cell or the first frequency point is not the cell or the frequency point that supports the access by the terminal device.

Optionally, in an embodiment of the present application, when the network type supported by the terminal device only includes the CAG network, and the first cell or the first frequency point is the cell or the frequency point within the allowed CAG cell identifier group or the cell frequency point group, the first cell or the first frequency point is the cell or the frequency point that supports the access by the terminal device.

Optionally, in an embodiment of the present application, when the network type supported by the terminal device only includes the CAG network, and the first cell or the first frequency point is a cell or a frequency point of the public network only, the first cell or the first frequency point is not the cell or the frequency point that supports the access by the terminal device.

Optionally, in an embodiment of the present application, when the network type supported by the terminal device only includes the CAG network, and the first cell or the first frequency point is a cell or a frequency point supporting a PLMN public network and the CAG network, the first cell or the first frequency point is the cell or the frequency point supporting the access by the terminal device.

Optionally, in an embodiment of the present application, when the network type supported by the terminal device only includes the CAG network, and the first cell or the first frequency point is a cell or a frequency point of the SNPN network, the first cell or the first frequency point is not the cell or the frequency point that supports the access by the terminal device.

Optionally, in an embodiment of the present application, when the network type supported by the terminal device is the SNPN network, and the first cell or the first frequency point is the cell or the frequency point of the public network, the first cell or the first frequency point is not the cell or the frequency point that supports the access by the terminal device.

Optionally, in an embodiment of the present application, when the network type supported by the terminal device is the SNPN network, and the first cell or the first frequency point is the cell or the frequency point of the CAG network, the first cell or the first frequency point is not the cell or the frequency point that supports the access by the terminal device.

Optionally, in an embodiment of the present application, when the network type supported by the terminal device is the SNPN network, and the cell or the frequency point accessed currently by the terminal device belongs to a same SNPN cell identifier group or cell frequency point group as the first cell or the first frequency point, the first cell or the first frequency point is the cell or the frequency point that supports the access by the terminal device.

Optionally, in an embodiment of the present application, a cell or a frequency point accessed by the terminal device for the first time (for example, the cell or the frequency point accessed for the first time after powering on) may have to belong to a certain SNPN cell identifier group or cell frequency point group that is preconfigured, or configured by a network, that is, the terminal device may judge whether the cell or the frequency point accessed for the first time belongs to a certain SNPN cell identifier group or cell frequency point group, if yes, accesses; otherwise, not accesses.

Alternatively, after the terminal device accesses a certain cell or frequency point for the first time, it may determine an SNPN cell identifier group or cell frequency point group to which the cell or the frequency point belongs, and require that each of subsequently accessed cells or frequency points belongs to the SNPN cell identifier group or cell frequency point group.

Optionally, in an embodiment of the present application, when the network type supported by the terminal device is the SNPN network, and the first cell or the first frequency point belongs to an allowed SNPN cell identifier group or cell frequency point group, the first cell or the first frequency point is the cell or the frequency point that supports the access by the terminal device.

Optionally, in an embodiment of the present application, when the network type supported by the terminal device is the SNPN network, and the first cell or the first frequency point is also of the SNPN network, the first cell or the first frequency point is the cell or the frequency point that supports the access by the terminal device.

Optionally, in an embodiment of the present application, when the network type supported by the terminal device is a non-SNPN network, and the first cell or the first frequency point is also of the non-SNPN network, the first cell or the first frequency point is the cell or the frequency point that supports the access by the terminal device.

Optionally, in an embodiment of the present application, when the network type supported by the terminal device is the non-SNPN network, and the first cell or the first frequency point is the cell or the frequency point of the SNPN network, the first cell or the first frequency point is not the cell or the frequency point that supports the access by the terminal device.

Optionally, in an embodiment of the present application, when the network type supported by the terminal device is the non-SNPN network, and the first cell or the first frequency point is the cell or the frequency point of the public network, the first cell or the first frequency point is the cell or the frequency point that supports the access by the terminal device.

Optionally, in an embodiment of the present application, when the network type supported by the terminal device is the non-SNPN network, and the first cell or the first frequency point is a cell or a frequency point of the CAG, the first cell or the first frequency point is the cell or the frequency point that supports the access by the terminal device.

Therefore, in the embodiment of the present application, before measuring the first cell or the first frequency point, the terminal device may first judge whether the first cell or the first frequency point is the cell or the frequency point supporting the access by the terminal device. If the first cell or the first frequency point is the cell or the frequency point supporting the access by the terminal device, the terminal device may measure the first cell or the first frequency point; if the first cell or the first frequency point is not the cell or the frequency point supporting the access by the terminal device, the terminal device may not measure the first cell or the first frequency point. Alternatively, before reporting the measurement result of the first cell or the first frequency point, the terminal device may first judge whether the first cell or the first frequency point is the cell or the frequency point supporting the access by the terminal device. If the first cell or the first frequency point is the cell or the frequency point supporting the access by the terminal device, the terminal device may measure the first cell or the first frequency point and perform reporting; if the first cell or the first frequency point is not the cell or the frequency point supporting the access by the terminal device, the terminal device may not measure the first cell or the first frequency point and performing reporting. If the first cell or the first frequency point does not support the access by the terminal device, it is assumed that after the terminal device reports the measurement result of the first cell or the first frequency point, the network device will trigger an unnecessary handover process, which causes complexity of processing of the network device, and brings unnecessary interaction between network devices, and waste of interface resources between the network devices.

In an embodiment of the present application, the terminal device may send the measurement report to a source base station before measuring the cell, and the source base station decides whether cell handover is performed.

A main flow of handover may include a handover preparation stage, a handover execution stage and a handover completion stage.

Handover preparation: the source base station configures the terminal device to perform measurement and reporting, and sends a handover request to a target base station based on a report result of the terminal device. After the target base station agrees with the handover request, it will configure mobilityControlInformation of a Radio Resource Control (RRC) message for the terminal device, wherein the mobilityControlInformation includes a Random Access Channel (RACH) resource, a Cell-Radio Network Temporary Identifier (C-RNTI), a security algorithm of the target base station, and a system message of the target base station, etc.

Handover execution: the source base station forwards the mobilityControlInformation to the terminal device, and the terminal device initiates a random access procedure to the target base station after receiving a handover command. After the terminal device receives the handover command, the terminal device is disconnected from the source base station, and an entity such as a Packet Data Convergence Protocol (PDCP) entity, or the like is reestablished. At the same time, the source base station will send a Sequence Number (SN) STATUS TRANSFER to the target base station to inform the target base station of an uplink PDCP SN receiving status, and a downlink PDCP SN sending status.

Handover completion: after the terminal device successfully accesses the target base station (a random access is successful), the target base station will send a PATH HANDOVER REQUEST to request a core network device to switch a downlink path. After path switching is completed, the target base station will indicate the source base station to release a context of the terminal device, and the handover is completed.

In an embodiment of the present application, the terminal device may directly trigger the handover when the measurement result of the cell meets a condition for triggering the handover, or in an embodiment of the present application, the measurement result of the cell or the frequency point may also be used for another purpose in addition to the handover, which is not specifically limited in the embodiment of the present application.

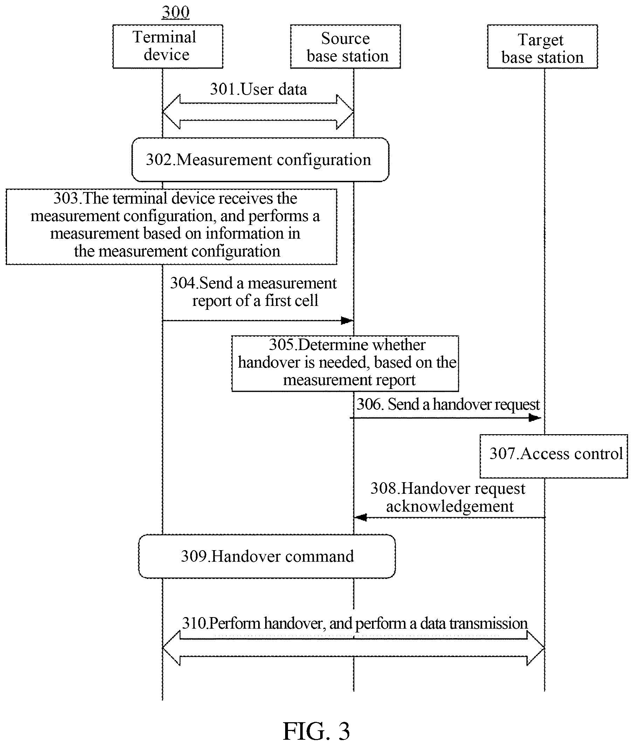

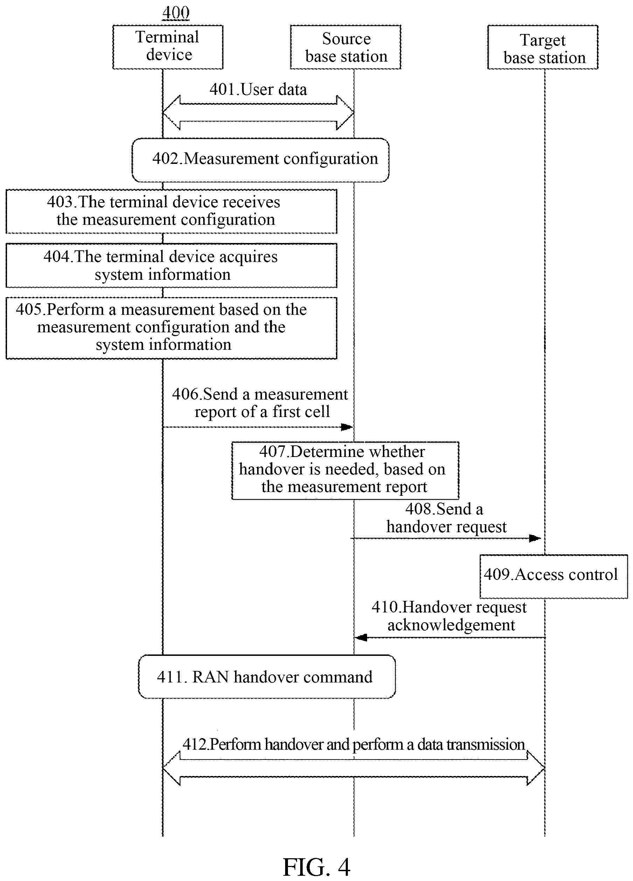

In order to understand the present application more clearly, an embodiment of the present application will be described below, with reference to FIGs. 3 and 4, based on a handover scenario.

FIG. 3 is a schematic flow chart of a wireless communication method 300 in accordance with an embodiment of the present application. The method 300 includes at least portion of the following contents.

In 301, a user data is transmitted between a terminal device and a source base station which is as a serving base station of the terminal device.

In 302, the source base station performs a measurement configuration.

In 303, the terminal device receives the measurement configuration, and performs a measurement based on information in the measurement configuration, which may specifically include judging whether a neighboring cell or a cell configured for the measurement is a cell supporting access by the terminal device, if yes, performing the measurement; if not, not performing the measurement. The specific judging method may be according to the above description.

In 304, the terminal device sends a measurement report of a first cell to the source base station.

In 305, the source base station judges whether handover is needed, when receiving the measurement report of the first cell.

In 306, the source base station sends a handover request to a target base station, that is, a base station of the first cell.

In 307, the target base station performs access control.

In 308, the target base station sends a handover request acknowledgement to the source base station.

In 309, the source base station sends a RAN handover command to the terminal device.

In 310, the terminal device performs the handover and performs a data transmission with the target base station.

FIG. 4 is a schematic flow chart of a wireless communication method 400 in accordance with an embodiment of the present application. The method 400 includes at least portion of the following contents. Acts 401, 402, 406, 407, 408, 409, 410, 411, and 412 in the method 400 may correspond to acts 301, 302, 404, 405, 406, 407, 408, and 409 in the method 300, respectively, which will not be repeated herein for brevity.

In 403, a terminal device receives a measurement configuration sent by a terminal, and in 403, the terminal device acquires system information. The terminal device may judge, based on the measurement configuration and the system information, whether a neighboring cell is a cell that supports access by the terminal device, if yes, a measurement is performed; if not, the measurement is not performed. The specific judging method may be according to the above description.

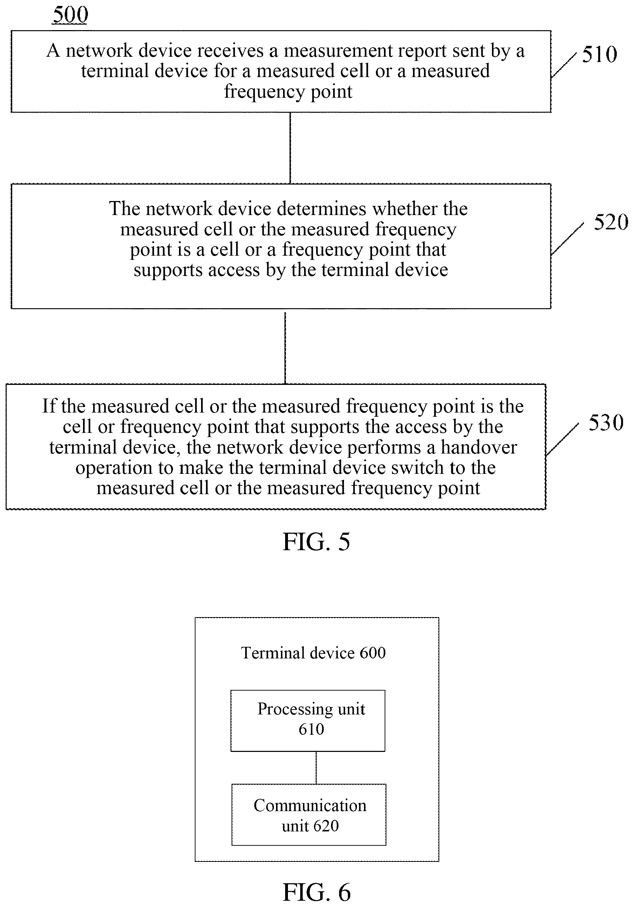

FIG. 5 is a schematic flow chart of a wireless communication method 500 in accordance with an embodiment of the present application. The method 500 includes at least portion of the following contents.

In 510, a network device receives a measurement report sent by a terminal device for a measured cell or a measured frequency point.

In 520, the network device determines whether the measured cell or the measured frequency point is a cell or a frequency point that supports access by the terminal device.

In 530, if the measured cell or the measured frequency point is the cell or the frequency point that supports the access by the terminal device, the network device performs a handover operation to make the terminal device switch to the measured cell or the measured frequency point.

In an embodiment of the present application, after receiving the measurement report sent by the terminal device for the measured cell or the measured frequency point, the network device judges whether the measured cell or the measured frequency point is the cell or the frequency point that supports the access by the terminal device, if yes, handover is performed; if not, making the terminal device switch to the measured cell or the measured frequency point is given up, or the terminal device is not handovered to that cell or frequency point, such that complexity of processing of the network device may be decreased, thereby bringing unnecessary interaction between network devices, and waste of interface resources between the network devices.

FIG. 6 is a schematic block diagram of a terminal device 600 in accordance with an embodiment of the present application. The terminal device 600 includes a processing unit 610 and a communication unit 620.

The processing unit 610 is configured to determine whether a first cell or a first frequency point is a cell or a frequency point that supports access by the terminal device; and measure the first cell or the first frequency point, if the first cell or the first frequency point is the cell or the frequency point that supports the access by the terminal device, and/or, the communication unit 620 is configured to report a measurement result of the first cell or the first frequency point, if the first cell or the first frequency point is the cell or the frequency point that supports the access by the terminal device.

Optionally, in an embodiment of the present application, the processing unit 610 is further configured to not measure the first cell or the first frequency point, if the first cell or the first frequency point is not the cell or the frequency point that supports the access by the terminal device; and the communication unit 620 is configured to not report the measurement result of the first cell or the first frequency point, if the first cell or the first frequency point is the cell or the frequency point that supports the access by the terminal device.

Optionally, in an embodiment of the present application, whether the first cell or the first frequency point is the cell or the frequency point that supports the access by the terminal device is determined according to at least one of the following: network types supported and/or not supported by the terminal device, and network types supported and/or not supported by the first cell or the first frequency point; a cell identifier group or a frequency point identifier group corresponding to the network types supported and/or not supported by the terminal device, and an identifier of the first cell or the first frequency point; network types supported and/or not supported by a cell or a frequency point accessed currently by the terminal device, and network types supported and/or not supported by the first cell or the first frequency point; or historical access information of the terminal device.

Optionally, in an embodiment of the present application, the different network types are distinguished by at least one of the following: whether being a private network or a public network; or whether being a private network that supports a public PLMN or a private network that does not support the public PLMN.

Optionally, in an embodiment of the present application, the private network supporting the public PLMN is a Closed access group (CAG) network; and/or the private network that does not support the public PLMN is a Stand-alone non-public network (SNPN) network.

Optionally, in an embodiment of the present application, the network types supported and/or not supported by the first cell or the first frequency point are determined according to at least one of the following: a cell identifier group or a frequency point identifier group corresponding to the network types supported and/or not supported by the terminal device; system information acquired from the first cell or the first frequency point; configuration information from a network side; information preset for the terminal device; or the historical access information of the terminal device.

Optionally, in an embodiment of the present application, the network types supported and/or not supported by the terminal device are determined according to at least one of the following: information preset for the terminal device; configuration information from the network side; or the historical access information of the terminal device.

Optionally, in an embodiment of the present application, the cell identifier group or the frequency point identifier group corresponding to the network type supported by the terminal device is determined according to at least one of the following: system information acquired from the network side; the configuration information from the network side; the information preset for the terminal device; or the historical access information of the terminal device.

Optionally, in an embodiment of the present application, when the network type supported by the terminal device only includes a CAG network, and the first cell or the first frequency point is a cell or a frequency point outside an allowed CAG cell identifier group or cell frequency point group, the first cell or the first frequency point is not the cell or the frequency point that supports the access by the terminal device; and/or, when the network type supported by the terminal device only includes the CAG network, and the first cell or the first frequency point is a cell or a frequency point within the allowed CAG cell identifier group or cell frequency point group, the first cell or the first frequency point is the cell or the frequency point that supports the access by the terminal device; and/or, when the network type supported by the terminal device only includes the CAG network, and the first cell or the first frequency point is a cell or a frequency point of a public network only, the first cell or the first frequency point is not the cell or the frequency point that supports the access by the terminal device; and/or when the network type supported by the terminal device only includes the CAG network, and the first cell or the first frequency point is a cell or a frequency point of the SNPN network, the first cell or the first frequency point is not the cell or the frequency point that supports the access by the terminal device; and/or, when the network type supported by the terminal device only includes the CAG network, and the first cell or the first frequency point is a cell or a frequency point of a PLMN public network and the CAG network, the first cell or the first frequency point is the cell or the frequency point supporting the access by the terminal device.

Optionally, in an embodiment of the present application, when the network type supported by the terminal device is the SNPN network, and the first cell or the first frequency point is a cell or a frequency point of the public network, the first cell or the first frequency point is not the cell or the frequency point that supports the access by the terminal device; and/or when the network type supported by the terminal device is the SNPN network, and the first cell or the first frequency point is a cell or a frequency point of the CAG network, the first cell or the first frequency point is not the cell or the frequency point that supports the access by the terminal device; and/or, when the network type supported by the terminal device is the SNPN network, and the cell or the frequency point accessed currently by the terminal device belongs to a same SNPN cell identifier group or cell frequency point group as the first cell or the first frequency point, the first cell or the first frequency point is the cell or the frequency point that supports the access by the terminal device; and/or when the network type supported by the terminal device is the SNPN network, and the first cell or the first frequency point belongs to an allowed SNPN cell identifier group or cell frequency point group, the first cell or the first frequency point is the cell or the frequency point that supports the access by the terminal device; and/or when the network type supported by the terminal device is the SNPN network, and the first cell or the first frequency point is the cell or the frequency point of the SNPN network, the first cell or the first frequency point is the cell or the frequency point that supports the access by the terminal device.

Optionally, in an embodiment of the present application, when the network type supported by the terminal device is a non-SNPN network, and the first cell or the first frequency point is the cell or the frequency point of the SNPN network, the first cell or the first frequency point is not the cell or the frequency point that supports the access by the terminal device; and/or when the network type supported by the terminal device is the non-SNPN network, and the first cell or the first frequency point is the cell or a frequency point of the public network, the first cell or the first frequency point is the cell or the frequency point that supports the access by the terminal device; and/or when the network type supported by the terminal device is the non-SNPN network, and the first cell or the first frequency point is a cell or a frequency point of a CAG, the first cell or the first frequency point is the cell or the frequency point that supports the access by the terminal device; and/or when the network type supported by the terminal device is the non-SNPN network, and the first cell or the first frequency point is the cell or the frequency point of the non-SNPN, the first cell or the first frequency point is the cell or the frequency point that supports the access by the terminal device.

It should be understood that the terminal device 600 may be configured to implement the corresponding operations implemented by the terminal device in the method described above, which will not be repeated herein for brevity.

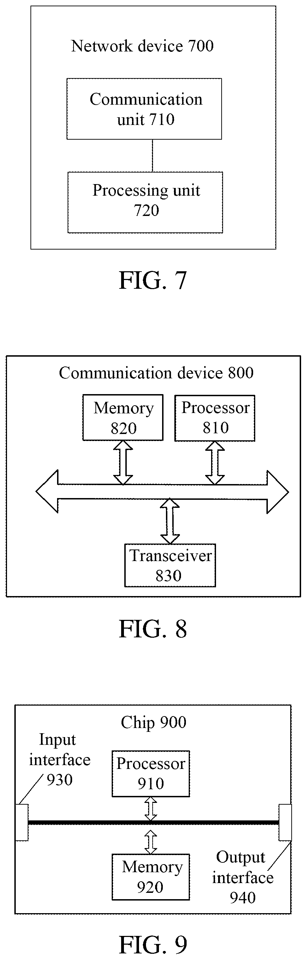

FIG. 7 is a schematic block diagram of a network device 700 in accordance with an embodiment of the present application. The network device 700 includes a communication unit 710 and a processing unit 720.

Optionally, in an embodiment of the present application, the communication unit 710 is configured to receive a measurement report sent by a terminal device for a measured cell or a measured frequency point. The processing unit 720 is configured to: determine whether the measured cell or the measured frequency point is a cell or a frequency point that supports access by the terminal device; and execute a handover operation to make the terminal device switch to the measured cell or the measured frequency point, if the measured cell or the measured frequency point is the cell or the frequency point that supports the access by the terminal device.

Optionally, in an embodiment of the present application, the processing unit 720 is further configured to: give up making the terminal device switch to the measured cell or the measured frequency point, if the measured cell or the measured frequency point is not the cell or the frequency point that supports the access by the terminal device.

It should be understood that the network device 700 may be configured to implement the corresponding operations implemented by the network device in the method described above, which will not be repeated herein for brevity.

FIG. 8 is a schematic structural diagram of a communication device 800 in accordance with an embodiment of the present application. The communication device 800 shown in FIG. 8 includes a processor 810, which may invoke, from a memory, and run a computer program to implement the method in accordance with the embodiment of the present application.

Optionally, as shown in FIG. 8, the communication device 600 may further include a memory 820. The processor 810 may invoke, from the memory 820, and run the computer program to implement the methods in accordance with the embodiments of the present application.

The memory 820 may be a separate device independent of the processor 610, or may be integrated in the processor 810.

Optionally, as shown in FIG. 8, the communication device 800 may further include a transceiver 830. The processor 810 may control the transceiver 830 to communicate with another device. Specifically, information or data may be sent to another device, or information or data sent by another device may be received.

The transceiver 830 may include a transmitter and a receiver. The transceiver 830 may also further include antennas, a quantity of which may be one or more.

Optionally, the communication device 800 may specifically be the network device in the embodiments of the present application, and the communication device 800 may implement the corresponding processes implemented by the network device in various methods in accordance with the embodiments of the present application, which will not be repeated herein for brevity.

Optionally, the communication device 800 may specifically be the mobile terminal/terminal device in the embodiments of the present application, and the communication device 800 may implement the corresponding processes implemented by the mobile terminal/terminal device in various methods in accordance with the embodiments of the present application, which will not be repeated herein for brevity.

FIG. 9 is a schematic structural diagram of a chip in accordance with an embodiment of the present application. The chip 900 shown in FIG. 9 includes a processor 910. The processor 910 may invoke, from a memory, and run a computer program to implement the methods in accordance with the embodiments of the present application.

Optionally, as shown in FIG. 9, the chip 900 may further include a memory 920. The processor 910 may invoke, from the memory 920, and run the computer program to implement the methods in accordance with the embodiments of the present application.

The memory 920 may be a separate device independent of the processor 910, or may be integrated in the processor 910.

Optionally, the chip 900 may further include an input interface 930. The processor 910 may control the input interface 930 to communicate with another device or chip. Specifically, information or data sent by another device or chip may be acquired.

Optionally, the chip 900 may further include an output interface 940. The processor 910 may control the output interface 940 to communicate with another device or chip. Specifically, information or data may be outputted to another device or chip.

Optionally, the chip may be applied to the network device in the embodiments of the present application, and the chip may implement the corresponding processes implemented by the network device in various methods in accordance with the embodiments of the present application, which will not be repeated herein for brevity.

Optionally, the chip may be applied to the mobile terminal/terminal device in the embodiments of the present application, and the chip may implement the corresponding processes implemented by the mobile terminal/terminal device in various methods in accordance with the embodiments of the present application, which will not be repeated herein for brevity.

It should be understood that the chip mentioned in the embodiments of the present application may be referred to as a system-level chip, a system chip, a chip system or a system chip-on-chip, etc.

It should be understood that the processor in the embodiments of the present application may be an integrated circuit chip having a signal processing capability. In an implementation process, each of the acts of the foregoing method embodiments may be completed through an integrated logic circuit of hardware in the processor or instructions in a form of software. The processor described above may be a general purpose processor, a Digital Signal Processor (DSP), an Application Specific Integrated Circuit (ASIC), a Field Programmable Gate Array (FPGA) or another programmable logic device, a discrete gate or a transistor logic device, or a discrete hardware component. Various methods, acts, and logical block diagrams disclosed in the embodiments of the present application may be implemented or executed. The general purpose processor may be a microprocessor, or the processor may also be any conventional processor, or the like. The acts of the methods disclosed in the embodiments of the present application may be directly embodied to be executed and completed by a hardware decoding processor, or may be performed and completed by a combination of hardware and software modules in a decoding processor. The software modules may be located in a storage medium which is mature in the art, such as a random access memory, a flash memory, a read-only memory, a programmable read-only memory or an electrically erasable programmable memory, a register, etc. The storage medium is located in a memory, and the processor reads information in the memory, and completes the acts of the foregoing methods in combination with its hardware.

It may be understood that the memory in the embodiments of the present application may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. Through an exemplary but non-restrictive description, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories in the systems and THE methods described herein are intended to include, but not be limited to, these and any other suitable types of memories.

It should be understood that the foregoing memory is an exemplary but non-restrictive description. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, the memories in the embodiments of the present application are intended to include, but not be limited to, these and any other suitable types of memories.

An embodiment of the present application further provides a computer-readable storage medium, configured to store a computer program.

Optionally, the computer-readable storage medium may be applied to the network device in the embodiments of the present application, and the computer program causes a computer to perform the corresponding processes implemented by the network device in various methods of the embodiments of the present application, which will not be repeated herein for brevity.

Optionally, the computer-readable storage medium may be applied to the mobile terminal/terminal device in the embodiments of the present application, and the computer program causes the computer to perform the corresponding processes implemented by the mobile terminal/terminal device in various methods of the embodiments of the present application, which will not be repeated herein for brevity.

An embodiment of the present application further provides a computer program product, including computer program instructions.

Optionally, the computer program product may be applied to the network device in the embodiments of the present application, and the computer program instructions cause the computer to perform the corresponding processes implemented by the network device in various methods of the embodiments of the present application, which will not be repeated herein for brevity.

Optionally, the computer program product may be applied to the mobile terminal/terminal device in the embodiments of the present application, and the computer program instructions cause the computer to perform the corresponding processes implemented by the mobile terminal/terminal device in various methods of the embodiments of the present application, which will not be repeated herein for brevity.

An embodiment of the present application further provides a computer program.

Optionally, the computer program may be applied to the network device in the embodiments of the present application, and the computer program, when being run on the computer, causes the computer to perform the corresponding processes implemented by the network device in various methods of the embodiments of the present application, which will not be repeated herein for brevity.

Optionally, the computer program may be applied to the mobile terminal/terminal device in the embodiments of the present application, and the computer program, when being run on the computer, causes the computer to perform the corresponding processes implemented by the mobile terminal/terminal device in various methods of the embodiments of the present application, which will not be repeated herein for brevity.

A person of ordinary skill in the art may recognize that units and algorithm acts in various examples described in combination with the embodiments disclosed herein can be implemented in electronic hardware, or a combination of computer software and electronic hardware. Whether these functions are implemented in hardware or software depends on a specific application and design constraint of the technical solution. Skilled artisans may use different methods to implement the described functions for each particular application, but such an implementation should not be considered to be beyond the scope of the present application.

Those skilled in the art may clearly understand that for the sake of convenience and conciseness of a description, specific working processes of the systems, the devices and the units described above may refer to the corresponding processes in the above method embodiments, and will not be repeated herein.

In several embodiments provided by the present application, it should be understood that the disclosed systems, devices, and methods may be implemented in another mode. For example, the device embodiments described above are only illustrative, for example, a division of the units is only a logical function division, and there may be another division mode in an actual implementation. For example, multiple units or components may be combined or integrated into another system, or some features may be ignored or not performed. At another point, the shown or discussed coupling or direct coupling or communication connection between each other may be indirect coupling or a communication connection through some interfaces, devices, or units, or may be in an electrical, mechanical, or another form.

The unit described as a separate component may or may not be physically separated, and the component shown as a unit may or may not be a physical unit, i.e., it may be located in one place, or may be distributed onto multiple network units. Part or all of the units therein may be selected according to an actual need to achieve the purpose of the solution of the present embodiment.

In addition, various functional units in various embodiments of the present application may be integrated into one processing unit, or may exist physically separately, or two or more than two units may be integrated into one unit.

The function, if implemented in a form of a software functional unit and sold or used as an independent product, may be stored in a computer-readable storage medium. Based on such understanding, the technical solution of the present application, in essence, or the part contributing to the prior art, or part of the technical solution, may be embodied in a form of a software product, which is stored in a storage medium, and includes several instructions for causing a computer device (which may be a personal computer, a server, or a network device, etc.) to perform all or part of the acts of the methods in the various embodiments of the present application. And the aforementioned storage medium includes various media, such as a U disk, a mobile hard disk, a Read-Only Memory (ROM), a Random Access Memory (RAM), a magnetic disk, or an optical disk, etc., which are capable of storing program codes.

What are described above are merely specific implementations of the present application, but the protection scope of the present application is not limited thereto. Any variation or substitution that may easily occur to a person skilled in the art within the technical scope disclosed by the present application shall be included within the protection scope of the present application. Therefore, the protection scope of the present application shall be subject to the protection scope of the claims.

## Claims

1. A wireless communication method comprising:
determining, by a terminal device, whether a first cell or a first frequency point is a cell or a frequency point that supports access by the terminal device; and
in case that the first cell or the first frequency point is the cell or the frequency point that supports the access by the terminal device, measuring, by the terminal device, the first cell or the first frequency point, and/or reporting a measurement result of the first cell or the first frequency point.

2. The method according to claim 1, further comprising:
in case that the first cell or the first frequency point is not the cell or the frequency point that supports the access by the terminal device, not measuring, by the terminal device, the first cell or the first frequency point; and/or not reporting the measurement result of the first cell or the first frequency point.

3. The method according to claim 1 or 2, wherein whether the first cell or the first frequency point is the cell or the frequency point that supports the access by the terminal device is determined according to at least one of the following:
network types supported and/or not supported by the terminal device, and network types supported and/or not supported by the first cell or the first frequency point;
a cell identifier group or a frequency point identifier group corresponding to the network types supported and/or not supported by the terminal device, and an identifier of the first cell or the first frequency point;
network types supported and/or not supported by a cell or a frequency point accessed currently by the terminal device, and the network types supported and/or not supported by the first cell or the first frequency point; or
historical access information of the terminal device.

4. The method according to claim 3, wherein the different network types are distinguished by at least one of the following:
whether being a private network or a public network; or
whether being a private network that supports a public PLMN or a private network that does not support the public PLMN.

5. The method according to claim 4, wherein the private network supporting the public PLMN is a Closed access group (CAG) network; and/or the private network that does not support the public PLMN is a Stand-alone non-public network (SNPN) network.

6. The method according to any one of claims 2 to 5, wherein the network types supported and/or not supported by the first cell or the first frequency point are determined according to at least one of the following:
a cell identifier group or a frequency point identifier group corresponding to the network types supported and/or not supported by the terminal device;
system information acquired from the first cell or the first frequency point;
configuration information from a network side;
information preset for the terminal device; or
historical access information of the terminal device.

7. The method according to any one of claims 2 to 6, wherein the network types supported and/or not supported by the terminal device are determined according to at least one of the following:
information preset for the terminal device;
configuration information from a network side; or
historical access information of the terminal device.

8. The method according to any one of claims 2 to 7, wherein the cell identifier group or the frequency point identifier group corresponding to the network type supported by the terminal device is determined according to at least one of the following:
system information acquired from a network side;
configuration information from the network side;
information preset for the terminal device; or
historical access information of the terminal device.

9. The method according to any one of claims 1 to 8, wherein,
when the network type supported by the terminal device only comprises a CAG network, and the first cell or the first frequency point is a cell or a frequency point outside an allowed CAG cell identifier group or cell frequency point group, the first cell or the first frequency point is not the cell or the frequency point that supports the access by the terminal device; and/or,
when the network type supported by the terminal device only comprises the CAG network, and the first cell or the first frequency point is a cell or a frequency point within the allowed CAG cell identifier group or cell frequency point group, the first cell or the first frequency point is the cell or the frequency point that supports the access by the terminal device; and/or,
when the network type supported by the terminal device only comprises the CAG network, and the first cell or the first frequency point is a cell or a frequency point of a public network only, the first cell or the first frequency point is not the cell or the frequency point that supports the access by the terminal device; and/or,
when the network type supported by the terminal device only comprises the CAG network, and the first cell or the first frequency point is a cell or a frequency point of an SNPN network, the first cell or the first frequency point is not the cell or the frequency point that supports the access by the terminal device; and/or,
when the network type supported by the terminal device only comprises the CAG network, and the first cell or the first frequency point is a cell or a frequency point of a PLMN public network and the CAG network, the first cell or the first frequency point is the cell or the frequency point supporting the access by the terminal device.

10. The method according to any one of claims 1 to 8, wherein,
when the network type supported by the terminal device is an SNPN network, and the first cell or the first frequency point is a cell or a frequency point of a public network, the first cell or the first frequency point is not the cell or the frequency point that supports the access by the terminal device; and/or
when the network type supported by the terminal device is the SNPN network, and the first cell or the first frequency point is a cell or a frequency point of a CAG network, the first cell or the first frequency point is not the cell or the frequency point that supports the access by the terminal device; and/or,
when the network type supported by the terminal device is the SNPN network, and a cell or a frequency point accessed currently by the terminal device belongs to a same SNPN cell identifier group or cell frequency point group as the first cell or the first frequency point, the first cell or the first frequency point is the cell or the frequency point that supports the access by the terminal device; and/or
when the network type supported by the terminal device is the SNPN network, and the first cell or the first frequency point belongs to an allowed SNPN cell identifier group or cell frequency point group, the first cell or the first frequency point is the cell or the frequency point that supports the access by the terminal device; and/or
when the network type supported by the terminal device is the SNPN network, and the first cell or the first frequency point is a cell or a frequency point of the SNPN network, the first cell or the first frequency point is the cell or the frequency point that supports the access by the terminal device.

11. The method according to any one of claims 1 to 8, wherein,
when the network type supported by the terminal device is a non-SNPN network, and the first cell or the first frequency point is a cell or a frequency point of an SNPN network, the first cell or the first frequency point is not the cell or the frequency point that supports the access by the terminal device; and/or
when the network type supported by the terminal device is the non-SNPN network, and the first cell or the first frequency point is a cell or a frequency point of a public network, the first cell or the first frequency point is the cell or the frequency point that supports the access by the terminal device; and/or
when the network type supported by the terminal device is the non-SNPN network, and the first cell or the first frequency point is a cell or a frequency point of a CAG network, the first cell or the first frequency point is the cell or the frequency point that supports the access by the terminal device; and/or
when the network type supported by the terminal device is the non-SNPN network, and the first cell or the first frequency point is a cell or a frequency point of the non-SNPN network, the first cell or the first frequency point is the cell or the frequency point that supports the access by the terminal device.

12. A wireless communication method, comprising:
receiving, by a network device, a measurement report sent by a terminal device for a measured cell or a measured frequency point;
determining, by the network device, whether the measured cell or the measured frequency point is a cell or a frequency point that supports access by the terminal device; and
if the measured cell or the measured frequency point is the cell or the frequency point that supports the access by the terminal device, performing, by the network device, a handover operation to make the terminal device switch to the measured cell or the measured frequency point.

13. The method according to claim 12, further comprising:
giving up, by the terminal device, making the terminal device switch to the measured cell or the measured frequency point, in case that the measured cell or the measured frequency point is not the cell or the frequency point that supports the access by the terminal device.

14. A terminal device, comprising a processing unit and a communication unit, wherein
the processing unit is configured to determine whether a first cell or a first frequency point is a cell or a frequency point that supports access by the terminal device; and
the processing unit is further configured to measure the first cell or the first frequency point, in case that the first cell or the first frequency point is the cell or the frequency point that supports the access by the terminal device; and/or, the communication unit is configured to report a measurement result of the first cell or the first frequency point, in case that the first cell or the first frequency point is the cell or the frequency point that supports the access by the terminal device.

15. The device according to claim 14, wherein the processing unit is further configured to:
not measure the first cell or the first frequency point, in case that the first cell or the first frequency point is not the cell or the frequency point that supports the access by the terminal device; and/or,
the communication unit is further configured to report the measurement result of the first cell or the first frequency point, in case that the first cell or the first frequency point is the cell or the frequency point that supports the access by the terminal device.

16. The device according to claim 14 or 15, wherein whether the first cell or the first frequency point is the cell or the frequency point that supports the access by the terminal device is determined according to at least one of the following:
network types supported and/or not supported by the terminal device, and network types supported and/or not supported by the first cell or the first frequency point;
a cell identifier group or a frequency point identifier group corresponding to the network types supported and/or not supported by the terminal device, and an identifier of the first cell or the first frequency point;
network types supported and/or not supported by a cell or a frequency point accessed currently by the terminal device, and the network types supported and/or not supported by the first cell or the first frequency point; or
historical access information of the terminal device.

17. The device according to claim 16, wherein the different network types are distinguished by at least one of the following:
whether being a private network or a public network; or
whether being a private network that supports a public PLMN or a private network that does not support the public PLMN.

18. The device according to claim 17, wherein the private network supporting the PLMN is a Closed access group (CAG) network; and/or the private network that does not support the public PLMN is a Stand-alone non-public network (SNPN) network.

19. The device according to any one of claims 15 to 18, wherein the network types supported and/or not supported by the first cell or the first frequency point are determined according to at least one of the following:
a cell identifier group or a frequency point identifier group corresponding to the network types supported and/or not supported by the terminal device;
system information acquired from the first cell or the first frequency point;
configuration information from a network side;
information preset for the terminal device; or
historical access information of the terminal device.

20. The device according to any one of claims 15 to 19, wherein the network types supported and/or not supported by the terminal device are determined according to at least one of the following:
information preset for the terminal device;
configuration information from a network side; or
historical access information of the terminal device.

21. The terminal device according to any one of claims 15 to 20, wherein the cell identifier group or the frequency point identifier group corresponding to the network type supported by the terminal device is determined according to at least one of the following:
system information acquired from a network side;
configuration information from the network side;
information preset for the terminal device; or
historical access information of the terminal device.

22. The device according to any one of claims 14 to 21, wherein,
when the network type supported by the terminal device only comprises a CAG network, and the first cell or the first frequency point is a cell or a frequency point outside an allowed CAG cell identifier group or cell frequency point group, the first cell or the first frequency point is not the cell or the frequency point that supports the access by the terminal device; and/or,
when the network type supported by the terminal device only comprises the CAG network, and the first cell or the first frequency point is a cell or a frequency point within the allowed CAG cell identifier group or cell frequency point group, the first cell or the first frequency point is the cell or the frequency point that supports the access by the terminal device; and/or,
when the network type supported by the terminal device only comprises the CAG network, and the first cell or the first frequency point is a cell or a frequency point of a public network only, the first cell or the first frequency point is not the cell or the frequency point that supports the access by the terminal device; and/or
when the network type supported by the terminal device only comprises the CAG network, and the first cell or the first frequency point is a cell or a frequency point of an SNPN network, the first cell or the first frequency point is not the cell or the frequency point that supports the access by the terminal device; and/or,
when the network type supported by the terminal device only comprises the CAG network, and the first cell or the first frequency point is a cell or a frequency point of a PLMN public network and the CAG network, the first cell or the first frequency point is the cell or the frequency point supporting the access by the terminal device.

23. The device according to any one of claims 14 to 21, wherein,
when the network type supported by the terminal device is an SNPN network, and the first cell or the first frequency point is a cell or a frequency point of a public network, the first cell or the first frequency point is not the cell or the frequency point that supports the access by the terminal device; and/or
when the network type supported by the terminal device is the SNPN network, and the first cell or the first frequency point is a cell or a frequency point of the CAG network, the first cell or the first frequency point is not the cell or the frequency point that supports the access by the terminal device; and/or,
when the network type supported by the terminal device is the SNPN network, and a cell or a frequency point accessed currently by the terminal device belongs to a same SNPN cell identifier group or cell frequency point group as the first cell or the first frequency point, the first cell or the first frequency point is the cell or the frequency point that supports the access by the terminal device; and/or
when the network type supported by the terminal device is the SNPN network, and the first cell or the first frequency point belongs to an allowed SNPN cell identifier group or cell frequency point group, the first cell or the first frequency point is the cell or the frequency point that supports the access by the terminal device; and/or
when the network type supported by the terminal device is the SNPN network, and the first cell or the first frequency point is a cell or a frequency point of the SNPN network, the first cell or the first frequency point is the cell or the frequency point that supports the access by the terminal device.

24. The device according to any one of claims 14 to 21, wherein,
when the network type supported by the terminal device is a non-SNPN network, and the first cell or the first frequency point is a cell or a frequency point of the SNPN network, the first cell or the first frequency point is not the cell or the frequency point that supports the access by the terminal device; and/or
when the network type supported by the terminal device is the non-SNPN network, and the first cell or the first frequency point is a cell or a frequency point of a public network, the first cell or the first frequency point is a cell or a frequency point that supports the access by the terminal device; and/or
when the network type supported by the terminal device is the non-SNPN network, and the first cell or the first frequency point is a cell or a frequency point of a CAG, the first cell or the first frequency point is the cell or the frequency point that supports the access by the terminal device; and/or
when the network type supported by the terminal device is the non-SNPN network, and the first cell or the first frequency point is a cell or a frequency point of the non-SNPN network, the first cell or the first frequency point is the cell or the frequency point that supports the access by the terminal device.

25. A network device, comprising a communication unit and a processing unit, wherein
the communication unit is configured to: receive a measurement report sent by a terminal device for a measured cell or a measured frequency point; and
the processing unit is configured to: determine whether the measured cell or the measured frequency point is a cell or a frequency point that supports access by the terminal device; and execute a handover operation to make the terminal device switch to the measured cell or the measured frequency point, in case that the measured cell or the measured frequency point is the cell or the frequency point that supports the access by the terminal device.

26. The device according to claim 25, wherein the processing unit is further configured to:
give up making the terminal device switch to the measured cell or the measured frequency point, in case that the measured cell or the measured frequency point is not the cell or the frequency point that supports the access by the terminal device.

27. A terminal device, comprising: a processor and a memory, wherein the memory is configured to store a computer program, and the processor is configured to invoke and run the computer program stored in the memory to execute the method according to any one of claims 1 to 11.

28. A network device, comprising: a processor and a memory, wherein the memory is configured to store a computer program, and the processor is configured to invoke and run the computer program stored in the memory to execute the method according to claim 12 or 13.

29. A chip, comprising: a processor, configured to invoke, from a memory, and run a computer program to cause a device having the chip installed therein to perform the method according to any one of claims 1 to 11.

30. A chip, comprising: a processor, configured to invoke, from a memory, and run a computer program to cause a device having the chip installed therein to perform the method according to claim 12 or 13.

31. A computer readable storage medium, configured to store a computer program, wherein the computer program causes a computer to perform the method according to any one of claims 1 to 11.

32. A computer readable storage medium, configured to store a computer program, wherein the computer program causes a computer to perform the method according to claim 12 or 13.

33. A computer program product, comprising computer program instructions, wherein the computer program instructions cause a computer to perform the method according to any one of claims 1 to 11.

34. A computer program product, comprising computer program instructions, wherein the computer program instructions cause a computer to perform the method according to claim 12 or 13.

35. A computer program, causing a computer to perform the method according to any one of claims 1 to 11.

36. A computer program, causing a computer to perform the method according to claim 12 or 13.
